# EUROPEAN PATENT SPECIFICATION

(11) **EP 3 487 197 B1**
(45) Date of publication and mention of the grant of the patent: **04.10.2023**
(21) Application number: 17826813.2
(22) Date of filing: 08.05.2017
(51) Int. Cl.: H04L 9/40, H04W 12/02, H04W 12/033, H04W 12/0433

(54) **METHOD AND APPARATUS FOR SECURE COMMUNICATION BETWEEN VEHICLE-TO-EVERYTHING TERMINALS**
VERFAHREN UND VORRICHTUNG ZUR SICHEREN KOMMUNIKATION ZWISCHEN VEHICLE-TO-EVERYTHING-ENDGERÄTEN
PROCÉDÉ ET APPAREIL DE COMMUNICATION SÉCURISÉE ENTRE DES TERMINAUX V2X (VEHICLE TO EVERYTHING)

(30) Priority: 15.07.2016 CN 201610560474
(43) Date of publication of application: 22.05.2019
(73) Proprietor: ZTE Corporation, Shenzhen, Guangdong 518057 (CN)
(72) Inventor: YU, Wantao, Shenzhen Guangdong 518057 (CN)
(74) Representative: Ipsilon
(86) International application number: PCT/CN2017/083471
(87) International publication number: WO 2018/010474

(56) References cited:
- CN-A- 101 848 425
- CN-A- 104 537 313
- CN-A- 104 683 304
- "3rd Generation Partnership Project; Technical Specification Group Services and System Aspects; Study on Security Aspect for LTE support of V2X Services (Release 14)", 3GPP DRAFT; DRAFT_S3-160796-TR33.885 V3 RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 June 2016 (2016-06-06), XP051116725, Retrieved from the Internet: URL:http://www.3gpp.org/ftp/tsg_sa/WG3_Sec urity/TSGS3_83_Los_Cabos/Docs/ [retrieved on 2016-06-06]
- Alfred J Menezes ET AL: "Handbook of Applied Cryptography- chapter 13 - Key Management Techniques", , 16 October 1996 (1996-10-16), XP055467436, Baton Rouge ISBN: 978-0-429-46633-5 Retrieved from the Internet: URL:http://cacr.uwaterloo.ca/hac/about/cha p13.pdf [retrieved on 2018-04-16]
- "3rd Generation Partnership Project; Technical Specification Group Services and System Aspects; Study on Security issues to support Proximity Services (ProSe) (Release 13)", 3GPP STANDARD; 3GPP TR 33.833, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V1.7.0, 12 February 2016 (2016-02-12), pages 1-237, XP051087755, [retrieved on 2016-02-12]
- HUAWEI ET AL: "Security framework for V2V communication", 3GPP DRAFT; S3-160092-PCR-SECURITY FRAMEWORK FOR V2V COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. SA WG3, no. Dubrovnik, Croatia; 20160201 - 20160205 31 January 2016 (2016-01-31), XP051060370, Retrieved from the Internet: URL:http://www.3gpp.org/ftp/Meetings_3GPP_ SYNC/SA3/Docs/ [retrieved on 2016-01-31]
- "3rd Generation Partnership Project; Technical Specification Group Services and System Aspects; Proximity-based Services (ProSe); Security aspects (Release 12)", 3GPP STANDARD; 3GPP TS 33.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V12.7.0, 24 June 2016 (2016-06-24), pages 1-67, XP051123568, [retrieved on 2016-06-24]

## Description

### TECHNICAL FIELD

The present application relates, but is not limited to the field of communications, and more particularly, relates to a method and apparatus for secure communication between vehicle-to-everything terminals.

### BACKGROUND

At present, in a vehicle networking communication system, communications between vehicle networking terminals (vehicle-to-everything terminals) and between the vehicle networking terminals and other terminals can be realized by vehicle networking services. The vehicle networking communication system may include vehicle networking terminals (including on-vehicle terminals and terminals installed with vehicle networking applications), on-vehicle road side units, vehicle networking application servers, vehicle networking control function entities, etc. The vehicle networking services include communication (V2I, vehicle to infrastructure) between an on-vehicle terminal and a Road Side Unit, communication (V2N, vehicle to Network) between an on-vehicle terminal and an application server (such as a traffic safety server), communication (V2P, vehicle to Pedestrian) between an on-vehicle terminal and a user terminal, and communication (V2V, vehicle to vehicle) between on-vehicle terminals. The vehicle networking communication can be collectively referred to as V2X (Vehicle-to-Everything) communication.

In the V2X communication, the vehicle-to-everything terminals participating in the communication often change dynamically. For example, when one vehicle-to-everything terminal broadcasts information, other vehicle-to-everything terminals that receive the broadcast information will constantly change. Since information about the vehicle speed, position, etc. in the broadcast information is crucial to the control of the vehicle, it is necessary to ensure the safety and continuity of the V2X communication.

In the case that the entities participating in the communication change dynamically, there is no effective solution provided in the related arts for how to solve the security problem of one-to-many communication between the vehicle-to-everything terminals in the V2X communication and ensure the security of the communication between the vehicle-to-everything terminals.

This section provides background information related to the present disclosure which is not necessarily prior art.

"3rd Generation Partnership Project; Technical Specification Group Services and System Aspects; Study on Security Aspect for LTE support of V2X Services (Release 14)", 6 June 2016, discloses security of one-to-many V2X direct communication (broadcast messages). The V2X Key Management is as follows: terminal selects a service according to Service ID in the message, gets authorisation and requests a key for this service from the key management function. The terminal uses the provisioned security credential and policy to send and receive protected messages to and from another terminals.

### SUMMARY

The present invention is defined by the subject matter of the independent claims. Preferred embodiments are defined by the dependent claims.

### BRIEF DESCRIPTION OF THE DRAWINGS

Adapted to
Fig. 1 is a flow diagram of a method for secure communication between vehicle-to-everything terminals according to an embodiment of the present disclosure;
Fig. 2 is a flow diagram illustrating registration of a vehicle-to-everything terminal to a V2X service platform according to an embodiment of the present disclosure;
Fig. 3 is a flow diagram illustrating logout of the vehicle-to-everything terminal to the V2X service platform according to the embodiment of the present disclosure;
Fig. 4 is a flow diagram illustrating communication between the vehicle-to-everything terminals according to the embodiment of the present disclosure;
Fig. 5 is a schematic diagram illustrating a scenario of the flow as shown in Fig. 4;
Fig. 6 is a flow diagram illustrating communication between the vehicle-to-everything terminals in a dynamically changed scenario according to the embodiment of the present disclosure;
Fig. 7 is a schematic diagram illustrating a scenario of the flow as shown in Fig. 6;
Fig. 8 is a schematic diagram illustrating a composition structure of a first apparatus for secure communication between vehicle-to-everything terminals according to an embodiment of the present disclosure;
Fig. 9 is a schematic diagram illustrating a composition structure of a second apparatus for secure communication between vehicle-to-everything terminals according to an embodiment of the present disclosure;
Fig. 10 is a schematic diagram illustrating a composition structure of a third apparatus for secure communication between vehicle-to-everything terminals according to an embodiment of the present disclosure; and
Fig. 11 is a schematic diagram illustrating a composition structure of a system for secure communication between vehicle-to-everything terminals according to an embodiment of the present disclosure.

### DETAILED DESCRIPTION

To make the objectives, technical solutions, and advantages of the present disclosure clearer, the following further describes the embodiments of the present disclosure in detail with reference to the accompanying drawings. It should be noted that, in case of no conflict, the embodiments in the present application and the features in the embodiments may be arbitrarily combined with each other.

The steps shown in the flow chart of the drawings may be performed in a computer system of a set of computer-executable instructions. Moreover, although logical sequences are shown in the flow charts, in some cases, the steps shown or described may be performed in different sequences than the ones described herein.

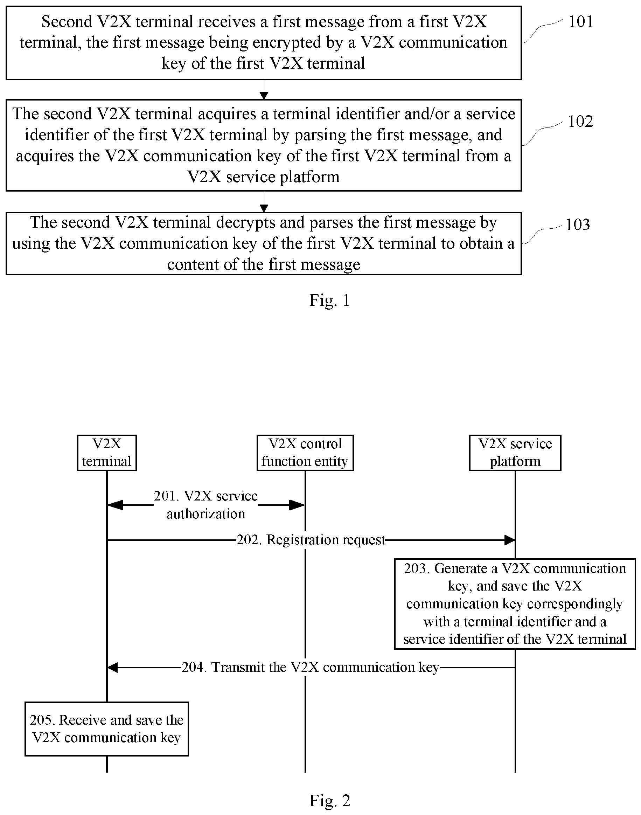

As shown in Fig. 1, the present application provides a method for secure communication between vehicle-to-everything (V2X) terminals. The method may include the following steps. In step 101, a second V2X terminal receives a first message from a first V2X terminal, the first message being encrypted by a V2X communication key of the first V2X terminal.

In step 102, the second V2X terminal acquires a terminal identifier and a service identifier of the first V2X terminal by parsing the first message, and acquires the V2X communication key of the first V2X terminal from the V2X service platform.

In step 103, the second V2X terminal decrypts and parses the first message by the V2X communication key of the first V2X terminal to acquire a content of the first message.

The V2X communication key is generated by the V2X service platform, and stored correspondingly with the terminal identifier and the service identifier of the first V2X terminal for communication between the first V2X terminal and other V2X terminal(s). Specifically, the V2X communication key of the first V2X terminal is used to encrypt and decrypt the message transmitted by the first V2X terminal. That is, the first V2X terminal uses the V2X communication key to encrypt before transmitting the message, and other V2X terminals use the V2X communication key to decrypt after receiving the message. Each V2X terminal may register the V2X communication key thereof through the V2X service platform, and according to the invention, different V2X terminals use different V2X communication keys to communicate.

After acquiring the V2X communication key of the first V2X terminal in step 102, the method further includes:
storing, by the second V2X terminal, the V2X communication key of the first V2X terminal in a local. After step 103, the method further includes:
removing, by the second V2X terminal, the V2X communication key of the first V2X terminal from the local when the communication between the second V2X terminal and the first V2X terminal is ended or the communication cannot be continued.

The acquiring the V2X communication key of the first V2X terminal in step 102 particularly includes: acquiring the V2X communication key of the first V2X terminal from the V2X service platform according to the terminal identifier and/or service identifier of the first V2X terminal. To be specific, the step may include: transmitting, by the second V2X terminal, a key request to the V2X service platform, the key request including the terminal identifier and the service identifier of the first V2X terminal, and a terminal identifier and a service identifier of the second V2X terminal; and receiving, by the second V2X terminal, the V2X communication key of the first V2X terminal returned by the V2X service platform. Accordingly, the present application also provides another method for secure communication between vehicle-to-everything (V2X) terminals. The method may include the following steps. Firstly, a V2X service platform receives a registration request from a first V2X terminal, the registration request including a terminal identifier and a service identifier of the first V2X terminal; secondly, the V2X service platform generates a V2X communication key for the first V2X terminal, and stores the V2X communication key correspondingly with the terminal identifier and the service identifier of the first V2X terminal; and finally, the V2X service platform returns the V2X communication key to the first V2X terminal; the V2X communication key being used for communication between the first V2X terminal and other V2X terminal.

Preferably, after the V2X service platform returns the V2X communication key to the first V2X terminal, the method may further include the following steps. The V2X service platform receives a key request from the second V2X terminal, the key request including the terminal identifier and the service identifier of the first V2X terminal, and a terminal identifier and a service identifier of the second V2X terminal; verifies whether the second V2X terminal is already registered according to the terminal identifier and/or service identifier of the second V2X terminal; and when verifying that the second V2X terminal is already registered, the V2X service platform searches the V2X communication key of the first V2X terminal according to the terminal identifier and/or service identifier of the first V2X terminal, and returns the V2X communication key of the first V2X terminal to the second V2X terminal. Here, when verifying that the second V2X terminal is not registered, the V2X service platform rejects the key request of the second V2X terminal.

Preferably, after returning the V2X communication key to the first V2X terminal, the method may further include the following steps. The V2X service platform receives a logout request from the first V2X terminal, the logout request including the terminal identifier and the service identifier of the first V2X terminal; the V2X service platform queries registration information of the first V2X terminal according to the terminal identifier and/or service identifier of the first V2X terminal, and removes the registration information; and the V2X service platform returns a logout completion message to the first V2X terminal, the registration information including the terminal identifier, the service identifier and the V2X communication key of the first V2X terminal.

Accordingly, the present application also provides a third method for secure communication between vehicle-to-everything (V2X) terminals. The method may include the following steps. Firstly, a first V2X terminal transmits a registration request to a V2X service platform, the registration request including a terminal identifier and a service identifier of the first V2X terminal; and secondly, the first V2X terminal receives a V2X communication key returned by the V2X service platform, and stores the V2X communication key in a local; wherein, the V2X communication key is used for communication between the first V2X terminal and other V2X terminal.

Preferably, after the first V2X terminal receives the V2X communication key returned by the V2X service platform, the method further includes the following step. The first V2X terminal transmits a first message, the first message being encrypted by the V2X communication key. Preferably, after storing the V2X communication key in the local, the method further includes the following steps. The first V2X terminal transmits a logout request to the V2X service platform, the logout request including the terminal identifier and the service identifier of the first V2X terminal; and the first V2X terminal receives a logout completion message returned by the V2X service platform, and removes the V2X communication key from the local. Accordingly, the present application also provides a fourth method for secure communication between vehicle-to-everything (V2X) terminals. The method may include the following steps. Firstly, a V2X service platform receives a registration request from a first V2X terminal, the registration request including a terminal identifier and a service identifier of the first V2X terminal, generates a V2X communication key for the first V2X terminal, stores the V2X communication key correspondingly with the terminal identifier and the service identifier of the first V2X terminal, and returns the V2X communication key to the first V2X terminal. Secondly, the first V2X terminal receives the V2X communication key returned by the V2X service platform, and stores the V2X communication key in a local.

Thirdly, the first V2X terminal transmits a first message, the first message being encrypted by the V2X communication key.

Fourthly, a second V2X terminal receives the first message, acquires the terminal identifier and the service identifier of the first V2X terminal by parsing the first message, and transmits a key request to the V2X service platform, the key request including the terminal identifier and the service identifier of the first V2X terminal, and a terminal identifier and a service identifier of the second V2X terminal.

Fifthly, the V2X service platform receives the key request, verifies whether the second V2X terminal is already registered according to the terminal identifier and/or service identifier of the second V2X terminal, and when verifying that the second V2X terminal is already registered, searches the V2X communication key of the first V2X terminal according to the terminal identifier and/or service identifier of the first V2X terminal, and returns the V2X communication key of the first V2X terminal to the second V2X terminal.

Sixthly, the second V2X terminal receives the V2X communication key of the first V2X terminal returned by the V2X service platform, and decrypts and parses the first message by using the V2X communication key of the first V2X terminal to acquire a content of the first message.

Preferably, after the second V2X terminal receives the V2X communication key of the first V2X terminal returned by the V2X service platform, the fourth method may further include the following step. The second V2X terminal stores the V2X communication key of the first V2X terminal in a local; and when the communication between the second V2X terminal and the first V2X terminal is ended or the communication cannot be continued, the method further includes the following step. The second V2X terminal removes the V2X communication key of the first V2X terminal from the local. It should be noted that the "first V2X terminal" mentioned herein is particularly the V2X terminal that transmits the message, and the "second V2X terminal" is particularly any of the V2X terminals that receive the message. Generally speaking, when the V2X terminals communicate with each other, one V2X terminal broadcasts a message, and all the V2X terminals within the communication range of the V2X terminal broadcasting the message will receive the message broadcasted by this V2X terminal. In this scenario, the terminal broadcasting the message is the first V2X terminal, and the terminals receiving the message are the second V2X terminals. In practical application, the "first message" mentioned herein refers to any type of message transmitted by the first V2X terminal, such as a broadcast message. There may be a plurality of the second V2X terminals. The V2X service platform may be actually a network entity in the V2X.

In this application, when the first V2X terminal broadcasts a message to other V2X terminals, each of the second V2X terminals receiving the message respectively transmits a key request to the V2X service platform, the key request including the terminal identifier and the service identifier of the second V2X terminal, and further including the terminal identifier and the service identifier of the first V2X terminal. The V2X service platform verifies whether each second V2X terminal is registered, and returns the V2X communication key of the first V2X terminal to the second V2X terminal(s) that has been registered. All the registered second V2X terminal may decrypt and parse the broadcast message of the first V2X terminal according to the V2X communication key of the first V2X terminal to acquire the content of the broadcast message. When the communication is ended or the communication cannot be continued, the second V2X terminal will remove the V2X communication key of the first V2X terminal. In this way, the present application can enable the V2X terminals to realize secure communication in a communication scene in which the V2X terminals participating in the communication change continuously and dynamically.

In this application, the V2X terminal acquiring V2X service authorization needs to register at the V2X service platform before the V2X communication can be carried out. The V2X terminals that are not registered at the V2X service platform cannot be used for communication related to V2X services. The V2X service platform creates the V2X communication key for the V2X terminal. The V2X service platform stores and manages the registration information of the V2X terminal, and the registration information may include the V2X communication key. When transmitting information, the V2X terminal participating in the communication must use the V2X communication key acquired when registering at the V2X service platform to carry out secure protection on the transmitted information. In order to decrypt the received information and carry out secure communication with the transmitter, the V2X terminal participating in the communication must request a V2X key of the transmitter from the V2X service platform when receiving the information. Different V2X terminals use different V2X communication keys. When the V2X terminals communicate with each other, the V2X terminal transmitting the message uses the V2X communication key acquired thereof to secure the communication. The V2X terminal receiving the message needs to request the V2X communication key of the V2X terminal transmitting the message from the V2X service platform to decrypt the message. In this way, secure communication between the V2X terminal and any one or more of other V2X terminals is realized.

### First embodiment

In this embodiment, a vehicle-to-everything (V2X) terminal may be registered at a V2X service platform. To be specific, Fig. 2 shows a flow chart of registering a V2X terminal. The process of registering the V2X terminal may include the following steps.

In step 201, the V2X terminal performs a V2X service authorization process with a V2X control function entity, and after the V2X service authorization process is completed, the V2X terminal acquires an authorized service identifier and storing the authorized service identifier.

In step 202, the V2X terminal transmits a registration request to the V2X service platform, the registration request including a terminal identifier and the service identifier of the V2X terminal.

In step 203, the V2X service platform receives the registration request, generates a V2X communication key for the V2X terminal, and stores the V2X communication key correspondingly with the terminal identifier and the service identifier of the V2X terminal.

In step 204, the V2X service platform returns the V2X communication key to the V2X terminal.

In step 205, the V2X terminal receives and stores the V2X communication key, and the registration process is ended.

It should be noted that the V2X communication key is used for secure communication between the V2X terminal and other V2X terminal. For example, the V2X communication key is used to encrypt a broadcast message transmitted by the V2X terminal, and other V2X terminals receiving the broadcast message need to decrypt the broadcast message based on the V2X communication key to further parse and acquire a content of the broadcast message.

### Second embodiment

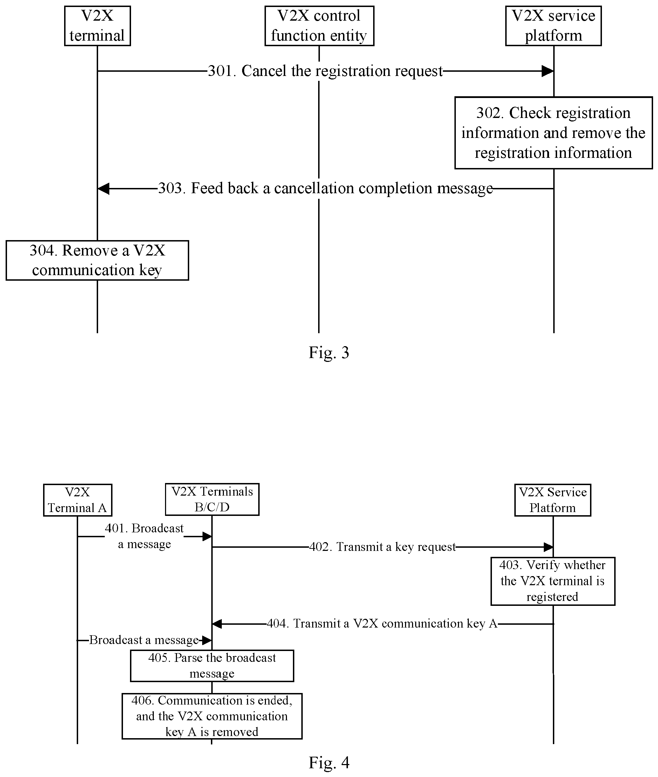

In this embodiment, a vehicle-to-everything (V2X) terminal may log out information registered at a V2X service platform. To be specific, Fig. 3 shows a flow chart of logging out a V2X terminal. The process of logging out the V2X terminal may include the following steps.

In step 301, the V2X terminal transmits a V2X logout request to a V2X service platform, the V2X logout request including a terminal identifier and a service identifier of the V2X terminal, wherein the service identifier is already authorized.

In step 302, the V2X service platform receives the V2X logout request, acquires the terminal identifier and the service identifier of the V2X terminal by parsing, queries registration information of the V2X terminal according to the terminal identifier and the service identifier of the V2X terminal, and removes the registration information.

Here, the registration information of the V2X terminal may include: the terminal identifier and the service identifier of the V2X terminal, and a corresponding V2X communication key thereof.

In practical application, after generating a V2X communication key for the V2X terminal, the V2X service platform correspondingly stores the V2X communication key and the terminal identifier and the service identifier of the V2X terminal in a database or storage. When a certain V2X terminal requests logout, the V2X service platform deletes the terminal identifier, the service identifier and the V2X communication key of the V2X terminal from the database or storage.

For example, the V2X service platform may write a terminal identifier, a service identifier and a V2X communication key of one V2X terminal into a data sheet of a database in the V2X service platform as a record. One record in the data sheet represents one piece of registration information, one piece of registration information corresponds to one V2X terminal, and when the V2X terminal requests logout, the corresponding record is removed from the data sheet, i.e., the registration information of the V2X terminal is removed.

For another example, the V2X service platform may also establish a data sheet for each V2X terminal in the database or storage, information such as the terminal identifier, the service identifier and the V2X communication key of the V2X terminal is recorded in the data sheet, one data sheet corresponds to one piece of registration information, and one piece of registration information corresponds to one V2X terminal. When the V2X terminal requests to be logged out, the corresponding data sheet is removed from the database or storage, i.e., the registration information of the V2X is removed.

In step 303, the V2X service platform feeds back a logout completion message to the V2X terminal, the logout completion message indicating that the registration information of the V2X terminal has been removed.

In step 304, the V2X terminal receives the logout completion message, and removes the local V2X communication key, and then the logout process is ended.

In practical application, the V2X terminal will store the V2X communication key for the communication thereof in a local after registration. When needing to be logged out, the V2X terminal may remove the V2X communication key from the local after receiving the logout completion message returned by the V2X service platform.

For example, the V2X terminal may write the V2X communication key for the communication thereof in the local database or memory as a record, and remove the record corresponding to the V2X communication key from the local database or storage or memory when logging out, i.e., remove the V2X communication key.

### Third embodiment

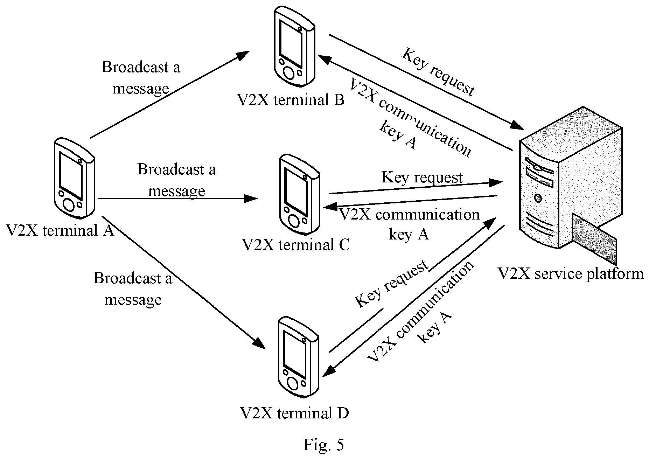

As shown in Fig. 4 and Fig. 5, the one-to-more secure communication process of the V2X terminal in the embodiment may include the following steps.

In step 401, a V2X terminal A broadcasts a message to other V2X terminals (V2X terminal B, V2X terminal C and V2X terminal D). The broadcast message is encrypted through a V2X communication key A registered by the V2X terminal A at a V2X service platform.

In step 402, the V2X terminal B, the V2X terminal C and the V2X terminal D respectively receive the broadcast message, parse header information of the broadcast message, acquire a terminal identifier and a service identifier of the V2X terminal A, and respectively transmit a key request to the V2X service platform, wherein the key request includes the terminal identifier and the service identifier of the V2X terminal A, and terminal identifiers and the service identifiers of the V2X terminal B/ the V2X terminal C/ the V2X terminal D.

The key request of the V2X terminal B includes the terminal identifier and the service identifier of the V2X terminal A, and the terminal identifier and the service identifier of the V2X terminal B. The key request of the V2X terminal C includes the terminal identifier and the service identifier of the V2X terminal A, and the terminal identifier and the service identifier of the V2X terminal D. The key request of the V2X terminal D includes the terminal identifier and the service identifier of the V2X terminal A, and the terminal identifier and the service identifier of the V2X terminal D.

In step 403, the V2X service platform receives the key requests transmitted by the V2X terminal B, the V2X terminal C and the V2X terminal D, verifies whether the V2X terminal B/the V2X terminal C/the V2X terminal D are already registered according to the terminal identifiers and the service identifiers of the V2X terminal B/the V2X terminal C/the V2X terminal D; and after verification, finds that the V2X terminal B and the V2X terminal C are already registered, but the V2X terminal D is not registered.

In step 404, the V2X service platform issues the V2X communication key A to the V2X terminal B and the V2X terminal C, and rejects to respond to the key request of the V2X terminal D.

Specifically, in this step, the V2X service platform only issues the V2X communication key A to the registered V2X terminals. For example, the V2X terminal B is already registered, but the V2X terminal C and the V2X terminal D are not registered, then the V2X communication key A is issued to the V2X terminal B only.

In step 405, the V2X terminal B/the V2X terminal C/the V2X terminal D receive the V2X communication key A, parse the broadcast message of the V2X terminal A according to the V2X communication key A, and acquire the content of the broadcast message.

In step 406, when the communication is ended or the communication cannot be continued, the V2X terminal B/the V2X terminal C/the V2X terminal D remove the V2X communication key A of the V2X terminal A.

It should be noted that the method flow of the embodiment is also applicable to the scenario where one V2X terminal transmits a broadcast message to another V2X terminal, i.e., the method flow of one-to-one secure communication between V2X terminals is the same as that shown in Fig. 4.

### Fourth embodiment

This embodiment is described with respect to secure communication between vehicle-to-everything (V2X) terminals in a dynamically changed communication scenario.

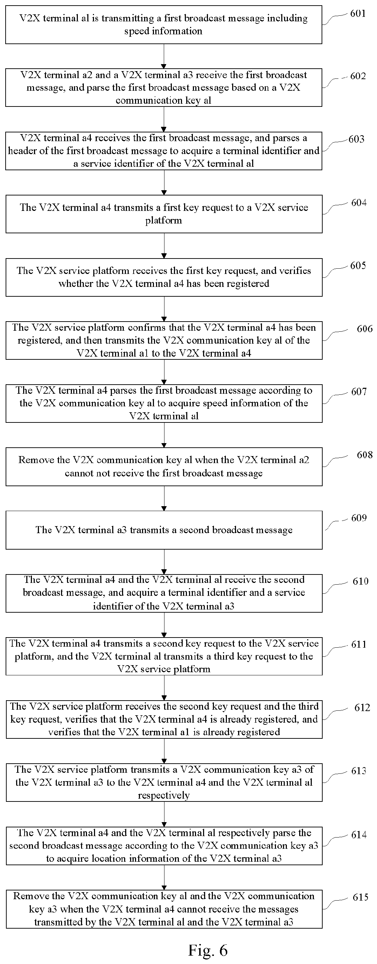

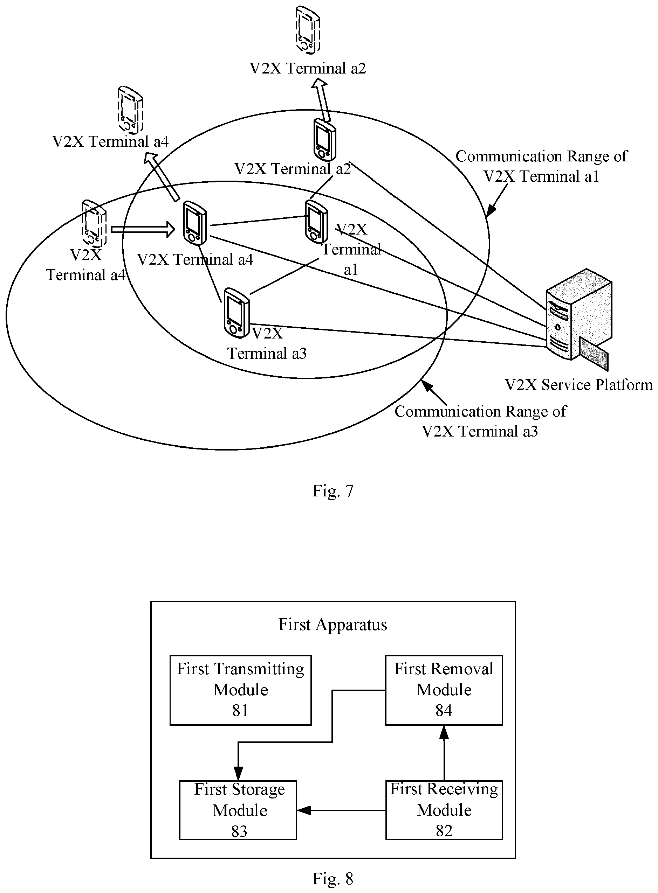

As shown in Fig. 6 and Fig. 7, a V2X terminal a1, a V2X terminal a2, and a V2X terminal a3 are in a communication process, and a vehicle carrying a V2X terminal a4 enters a communication range of the V2X terminal a1. At this moment, a specific flow of secure communication between the V2X terminals may include the following steps.

In step 601, the V2X terminal a1 is transmitting a first broadcast message including speed information, the first broadcast message being encrypted by a V2X communication key a1.

In step 602, the V2X terminal a2 and the V2X terminal a3 receive the first broadcast message, parse the first broadcast message based on the V2X communication key a1, and acquire the speed information of the V2X terminal a1.

In step 603, the vehicle carrying the V2X terminal a4 drives in the communication range of the V2X terminal a1, the V2X terminal a4 receives the first broadcast message, parses a header of the first broadcast message, and acquires a terminal identifier and a service identifier of the V2X terminal a1.

In step 604, the V2X terminal a4 transmits a first key request to a V2X service platform, the first key request including the terminal identifier and the service identifier of the V2X terminal a1, and a terminal identifier and a service identifier of the V2X terminal a4.

In step 605, the V2X service platform receives the first key request, parses the key request to acquire the terminal identifier and the service identifier of the V2X terminal a4, and verifies whether the V2X terminal a4 is registered according to the terminal identifier and the service identifier of the V2X terminal a4.

The registration information may be a record of the terminal identifier and the V2X service identifier, and the V2X communication key of the V2X terminal. A content of the registration information may include the V2X communication key, the terminal identifier and the V2X service identifier of the V2X terminal, etc. In addition, the registration information may also include other contents, such as other information of the V2X terminal.

When the V2X service platform verifies whether the V2X terminal is registered or not, if there is registration information (for example, there is a record) of the V2X terminal, then it indicates that the V2X terminal is already registered, and if there is no registration information (for example, there is no record) of the V2X terminal, then it indicates that the V2X terminal is not registered.

In step 606, the V2X service platform confirms that the V2X terminal a4 is already registered, and then transmits the V2X communication key a1 of the V2X terminal a1 to the V2X terminal a4.

In step 607, the V2X terminal a4 parses the first broadcast message according to the V2X communication key a1 to acquire the speed information of the V2X terminal a1.

In step 608, the V2X terminal a2 drives out of the communication range of the V2X terminal a1. When the V2X terminal a2 cannot not receive the first broadcast message, the V2X communication key a1 is removed, and the communication between the V2X terminal a2 and the V2X terminal a1 is ended.

In step 609, the V2X terminal a3 starts broadcasting location information thereof and transmits a second broadcast message, the second broadcast message being encrypted by a V2X communication key a3 and including the location information of the V2X terminal a3. In step 610, the V2X terminal a4 and the V2X terminal a1 are currently located in a communication coverage area of the V2X terminal a3, receive the second broadcast message, and parse a header of the second broadcast message to acquire the terminal identifier and the service identifier of the V2X terminal a3.

In step 611, the V2X terminal a4 transmits a second key request to the V2X service platform, the second key request including the terminal identifier and the service identifier of the V2X terminal a4, and the terminal identifier and the service identifier of the V2X terminal a3. The V2X terminal a1 transmits a third key request to the V2X service platform, the third key request including the terminal identifier and the service identifier of the V2X terminal a1, and the terminal identifier and the service identifier of the V2X terminal a3.

In step 612, the V2X service platform receives the second key request and the third key request, verifies that the V2X terminal a4 is already registered according to the terminal identifier and the service identifier of the V2X terminal a4, and verifies that the V2X terminal a1 is already registered according to the terminal identifier and the service identifier of the V2X terminal a1.

To be specific, the verification process of this step is the same as that of the step 605, and will not be elaborated.

In step 613, the V2X service platform transmits the V2X communication key a3 of the V2X terminal a3 to the V2X terminal a4 and the V2X terminal a1 respectively.

In step 614, the V2X terminal a4 and the V2X terminal a1 respectively parse the second broadcast message according to the V2X communication key a3 to acquire the location information of the V2X terminal a3.

In step 615, the vehicle carrying the V2X terminal a4 drives out of the communication range of the V2X terminal a1 and the V2X terminal a3. When the V2X terminal a4 cannot receive the messages transmitted by the V2X terminal a1 and the V2X terminal a3, the V2X communication key a1 and the V2X communication key a3 are removed, and the communication between the V2X terminal a4, and the V2X terminal a1 and the V2X terminal a3 is ended.

It should be noted that there is no necessary sequence of execution between steps 607 and steps 603 to 606, there is no necessary sequence of execution between steps 603 to 606 and steps 608 to 613, and there is no necessary sequence of execution between step 607 and step 614. The execution sequence of the steps depends on whether the V2X terminals are within the communication range of each other in the actual application scenario, and also depends on whether communication between the V2X terminals is necessary. For example, if the vehicles carrying the V2X terminal are far away from each other and there is no need to inform each other of their positions and speeds, then the communication between the V2X terminals may not be necessary. If the vehicles carrying the V2X terminals are close to each other, it is necessary to exchange the positions and speeds in time to avoid collision, at this moment, timely and secure communication is required between the V2X terminals.

As shown in Fig. 8, an embodiment of the present disclosure also provides a first apparatus for secure communication between vehicle-to-everything (V2X) terminals, the first apparatus being disposed in a first V2X terminal, and including:
a first transmitting module 81 configured to transmit a registration request to a V2X service platform, the registration request including a terminal identifier and a service identifier of the first V2X terminal;
a first receiving module 82 configured to receive a V2X communication key returned by the V2X service platform; and
a first storage module 83 configured to store the V2X communication key;
wherein, the V2X communication key is used for communication between the first V2X terminal and other V2X terminals.

Preferably, the first transmitting module 81 is also configured to transmit a first message, the first message being encrypted by the V2X communication key.

Preferably, the first apparatus may also include: a first removal module 84; to be specific, the first transmitting module 81 may also be configured to transmit a logout request to the V2X service platform, the logout request including the terminal identifier and the service identifier of the first V2X terminal; the first receiving module 82 may also be configured to receive a logout completion message returned by the V2X service platform, and notify the first removal module 84; and the first removal module 84 may also be configured to, after receiving the notification of the first receiving module 82, remove the V2X communication key from the storage module.

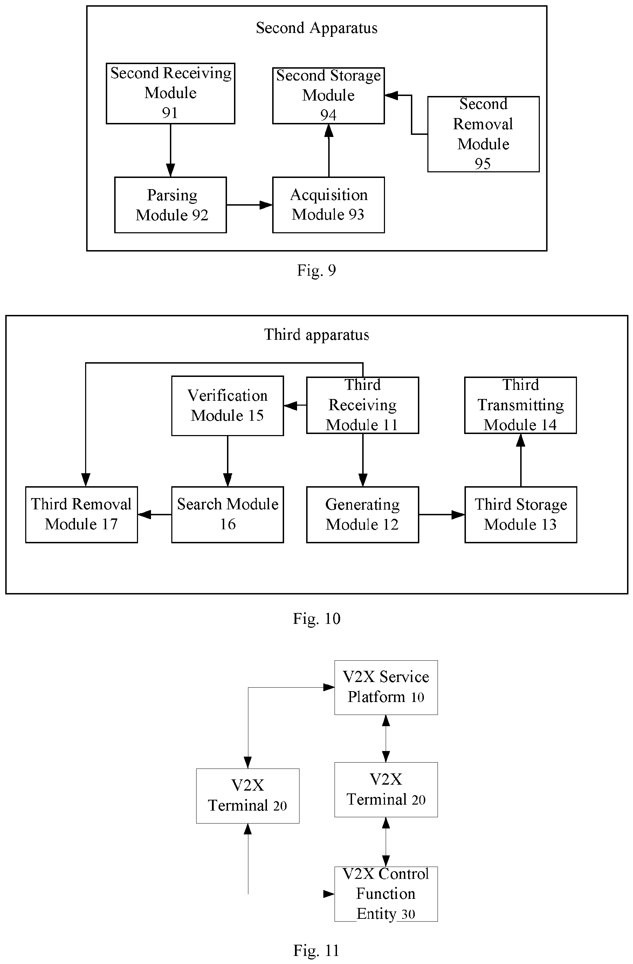

As shown in Fig. 9, an embodiment of the present disclosure also provides a second apparatus for secure communication between vehicle-to-everything (V2X) terminals. The second apparatus is disposed in a second V2X terminal, and may include: a second receiving module 91, a parsing module 92 and an acquisition module 93.

The second receiving module 91 is configured to receive a first message from a first V2X terminal, the first message being encrypted by a V2X communication key of the first V2X terminal.

The parsing module 92 is configured to acquire a terminal identifier and/or a service identifier of the first V2X terminal by parsing the first message; and, decrypt and parse the first message by the V2X communication key of the first V2X terminal acquired by the acquisition module to acquire a content of the first message.

The acquisition module 93 is configured to acquire the V2X communication key of the first V2X terminal from a V2X service platform according to the terminal identifier and/or service identifier acquired by the parsing module.

The V2X communication key is generated by the V2X service platform, and stored correspondingly with the terminal identifier and the service identifier of the first V2X terminal for communication between the first V2X terminal and other V2X terminals. Preferably, the second apparatus may also include: a second storage module 94 configured to store the V2X communication key of the first V2X terminal acquired by the acquisition module; and/or, a second removal module 95 configured to remove the V2X communication key of the first V2X terminal when the communication between the second V2X terminal and the first V2X terminal is ended or the communication cannot be continued.

To be specific, the acquisition module 93 may be configured to transmit a key request to the V2X service platform, the key request including the terminal identifier and the service identifier of the first V2X terminal, and a terminal identifier and a service identifier of the second V2X terminal; and receive the V2X communication key of the first V2X terminal returned by the V2X service platform.

As shown in Fig. 10, the present application also provides a third apparatus for secure communication between vehicle-to-everything (V2X) terminals, the third apparatus being disposed in a V2X service platform, and including:
a third receiving module 11 configured to receive a registration request from the first V2X terminal, the registration request including a terminal identifier and a service identifier of the first V2X terminal;
a generating module 12 configured to generate a V2X communication key for the first V2X terminal;
a third storage module 13 configured to store the V2X communication key generated by the generating module correspondingly with the terminal identifier and the service identifier of the first V2X terminal; and
a third transmitting module 14 configured to return the V2X communication key to the first V2X terminal;
wherein, the V2X communication key is used for communication between the first V2X terminal and other V2X terminals.

Preferably, the third apparatus may also include: a verification module 15 and a search module 16; to be specific, the third receiving module 11 may also be configured to receive a key request from a second V2X terminal, the key request including the terminal identifier and the service identifier of the first V2X terminal, and a terminal identifier and a service identifier of the second V2X terminal; the verification module 15 may also be configured to verify whether the second V2X terminal is already registered according to the terminal identifier and/or service identifier of the second V2X terminal in the key request received by the third receiving module 11, and notify the search module 16 when verifying that the second V2X terminal is already registered; the search module 16 may be configured to, after receiving the notification of the verification module, search the V2X communication key of the first V2X terminal according to the terminal identifier and/or service identifier of the first V2X terminal in the key request received by the third receiving module and return the V2X communication key of the first V2X terminal to the second V2X terminal; and the third transmission module 14 may also be configured to return the V2X communication key of the first V2X terminal searched by the search module to the second V2X terminal.

The third apparatus may also include: a third removal module 17; to be specific, the third receiving module 11 may also be configured to receive a logout request from the first V2X terminal, the logout request including the terminal identifier and the service identifier of the first V2X terminal; the search module 16 may also be configured to search registration information of the first V2X terminal according to the terminal identifier and/or service identifier of the first V2X terminal in the logout request received by the third receiving module, the registration information including the terminal identifier, the service identifier and the V2X communication key of the first V2X terminal; the third removal module 17 may also be configured to remove the registration information searched by the search module according to the logout request received by the third receiving module 11; and the third transmitting module 14 may also be configured to, after the third removal module removes the registration information of the first V2X terminal, return a logout completion message to the first V2X terminal.

In practical application, the third receiving module 11, the generating module 12, the third storage module 13, the third transmitting module 14, the verification module 15, the search module 16 and the third removal module 17 in the third apparatus may be realized by devices such as a Central Processing Unit (CPU), a Microprocessor (MPU), a Digital Signal Processor (DSP) or a Field Programmable Gate Array (FPGA) located on a network entity. Each module in the first apparatus and each module in the second apparatus may be implemented by devices such as CPU, MPU, DSP or FPGA located on the terminal equipment of the Internet of Things (IOT).

Fig. 11 is a schematic diagram illustrating a structure of a system for secure communication between vehicle-to-everything terminals provided by an embodiment of the present disclosure. The system may include: a V2X service platform 10, V2X terminals 20 and a V2X control function entity 30. The V2X service platform 10 may be actually realized by a network entity. The V2X control function entity 30 is configured to perform V2X service authorization process on the V2X terminal 20. The V2X service platform 10 includes the third apparatus described above, and at least two V2X terminals 20 are provided, one V2X terminal 20 includes the first apparatus described above and the other V2X terminal 20 includes the second apparatus described above. Or, each V2X terminal 20 includes the first apparatus and the second apparatus described above.

In this application, the first apparatus, the second apparatus, the third apparatus, and the system for secure communication between vehicle-to-everything (V2X) terminals may be configured to implement the above method embodiments, and the implementation principles and technical effects thereof are similar, which will not be elaborated herein.

Moreover, the present application also provides a computer readable storage medium storing a computer-executable instruction, wherein the computer-executable instruction is executed by a processor to implement any one of the methods above.

Those skilled in the art will appreciate that the embodiments of the present application can be provided as a method, a system, or a computer program product. Accordingly, the embodiments of the present application can take the form of a hardware embodiment, a software embodiment, or a combination embodiment of software and hardware. Moreover, the embodiments of the present application can take the form of a computer program product embodied on one or more computer usable storage media (including but not limited to disk storage and optical storage, etc.) in which computer usable program codes are included.

The present application has been described with reference to the flow charts and/or block diagrams of the method, device (system), and computer program products according to the embodiments of the present application. It should be appreciated that each flow and/or block in the flow charts and/or block diagrams, and combinations of the flows and/or blocks in the flow charts and/or block diagrams can be implemented by computer program instructions. These computer program instructions may be provided to a general purpose computer, a special purpose computer, an embedded processor, or a processor of other programmable data processing device to produce a machine for the instructions executed by the computer or the processor of other programmable data processing device to generate an apparatus for implementing the functions specified in one or more flows of the flow chart and/or in one or more blocks of the block diagram.

These computer program instructions may also be provided to a computer-readable memory that can guide the computer or other programmable data processing device to work in a given manner, so that the instructions stored in the computer-readable memory generate a product including an instruction apparatus that implements the functions specified in one or more flows of the flow chart and/or in one or more blocks of the block diagram.

These computer program instructions may also be loaded to a computer, or other programmable data processing device, so that a series of operating steps are executed on the computer, or other programmable data processing device to produce processing implemented by the computer, so that the instructions executed in the computer or other programmable data processing device provide steps for implementing the functions specified in one or more flows of the flow chart and/or in one or more blocks of the block diagram.

It is to be understood by those having ordinary skills in the art that all or part of the steps mentioned above can be completed by related hardware instructed by a program which can be stored in a computer readable storage medium, such as a read-only memory, a magnetic disk or an optical disc. Optionally, all or part of the steps of the foregoing embodiments can also be implemented by one or more integrated circuits. Accordingly, each module/unit in the above embodiments can be implemented in the form of hardware or software function modules. The present application is not limited to a combination of hardware and software in any particular form.

## Claims

1. A method for secure communication between Vehicle to Everything, V2X, terminals, performed by a second V2X terminal, comprising:
receiving (101) a first message broadcasted by a first V2X terminal, the first message being encrypted by a V2X communication key of the first V2X terminal, and acquiring a terminal identifier and a service identifier of the first V2X terminal by parsing the first message, in response to the second V2X terminal driving in a communication range of the first V2X terminal;
acquiring the V2X communication key of the first V2X terminal from a V2X service platform (102), and saving the V2X communication key of the first V2X terminal;
decrypting and parsing (103) the first message by using the V2X communication key of the first V2X terminal to acquire a content of the first message; and
removing the V2X communication key of the first V2X terminal, in response to the second V2X terminal driving out of the communication range of the first V2X terminal,
wherein the V2X communication key being generated by the V2X service platform, and saved correspondingly with the terminal identifier and the service identifier of the first V2X terminal for communication between the first V2X terminal and other V2X terminal, and different V2X terminals use different V2X communication keys to communicate.

2. The method according to claim 1, wherein the acquiring (102) the V2X communication key of the first V2X terminal from the V2X service platform comprises:
transmitting a key request to the V2X service platform, the key request comprising the terminal identifier and the service identifier of the first V2X terminal, and a terminal identifier and a service identifier of the second V2X terminal; and
receiving the V2X communication key of the first V2X terminal returned by the V2X service platform.

3. A method for secure communication between Vehicle to Everything, V2X, terminals, comprising:
receiving, by a V2X service platform, a registration request from a first V2X terminal, the registration request comprising a terminal identifier and a service identifier of the first V2X terminal, generating a V2X communication key for the first V2X terminal, saving the V2X communication key correspondingly with the terminal identifier and the service identifier of the first V2X terminal, and returning the V2X communication key to the first V2X terminal;
receiving, by the first V2X terminal, the V2X communication key returned by the V2X service platform, and saving the V2X communication key locally;
broadcasting, by the first V2X terminal, a first message, the first message being encrypted by the V2X communication key;
receiving, by a second V2X terminal, the first message, and acquiring the terminal identifier and the service identifier of the first V2X terminal by parsing the first message, in response to the second V2X terminal driving in a communication range of the first V2X terminal, and transmitting a key request to the V2X service platform, the key request comprising the terminal identifier and the service identifier of the first V2X terminal, and a terminal identifier and a service identifier of the second V2X terminal;
receiving, by the V2X service platform, the key request, verifying whether the second V2X terminal is already registered according to the terminal identifier and/or service identifier of the second V2X terminal, and when verifying that the second V2X terminal is already registered, searching the V2X communication key of the first V2X terminal according to the terminal identifier and/or service identifier of the first V2X terminal, and returning the V2X communication key of the first V2X terminal to the second V2X terminal;
receiving and saving, by the second V2X terminal, the V2X communication key of the first V2X terminal returned by the V2X service platform, and decrypting and parsing the first message by the V2X communication key of the first V2X terminal to acquire a content of the first message; and
removing, by the second V2X terminal, the V2X communication key of the first V2X terminal, in response to the second V2X terminal driving out of the communication range of the first V2X terminal,
wherein different V2X terminals use different V2X communication keys to communicate.

4. A second apparatus configured for secure communication between Vehicle to vehicle, V2X, terminals, the second apparatus being disposed in a second V2X terminal, and comprising:
a processor; and
a memory for storing instructions executable by the processor;
wherein the processor is configured to perform the method for secure communication between V2X terminals according to one of claim 1 or 2.

5. A computer readable storage medium storing a computer-executable instruction, wherein the computer-executable instruction is executed by a processor to implement the method for secure communication between Vehicle to Everything, V2X, terminals, performed by a second V2X terminal according to one of claim 1 or 2.

6. A computer readable storage medium storing a computer-executable instruction, wherein the computer-executable instruction is executed by a processor to implement the method for secure communication between Vehicle to Everything, V2X, terminals according to claim 3.

## Patentansprüche

1. Verfahren zur sicheren Kommunikation zwischen Endgeräten für Vehicle to Everything, V2X, ausgeführt von einem zweiten V2X-Endgerät, umfassend:
Empfangen (101) einer ersten Nachricht, die von einem ersten V2X-Endgerät gesendet wird, wobei die erste Nachricht durch einen V2X-Kommunikationsschlüssel des ersten V2X-Endgeräts verschlüsselt ist, und Erfassen einer Endgerätekennung und einer Servicekennung des ersten V2X-Endgeräts durch Analysieren der ersten Nachricht als Reaktion darauf, dass das zweite V2X-Endgerät in einem Kommunikationsbereich des ersten V2X-Endgeräts fährt;
Erfassen des V2X-Kommunikationsschlüssels des ersten V2X-Endgeräts von einer V2X-Dienstplattform (102) und Speichern des V2X-Kommunikationsschlüssels des ersten V2X-Endgeräts;
Entschlüsseln und Parsen (103) der ersten Nachricht unter Verwendung des V2X-Kommunikationsschlüssels des ersten V2X-Endgeräts, um einen Inhalt der ersten Nachricht zu erfassen; und
Entfernen des V2X-Kommunikationsschlüssels des ersten V2X-Endgeräts als Reaktion darauf, dass das zweite V2X-Endgerät aus dem Kommunikationsbereich des ersten V2X-Endgeräts herausfährt,
wobei der V2X-Kommunikationsschlüssel von der V2X-Dienstplattform erzeugt und entsprechend mit der Endgerätekennung und der Dienstkennung des ersten V2X-Endgeräts für die Kommunikation zwischen dem ersten V2X-Endgerät und anderen V2X-Endgeräten gespeichert wird, und verschiedene V2X-Endgeräte verschiedene V2X-Kommunikationsschlüssel zur Kommunikation verwenden.

2. Verfahren nach Anspruch 1, wobei das Erfassen (102) des V2X-Kommunikationsschlüssels des ersten V2X-Endgeräts von der V2X-Dienstplattform Folgendes umfasst:
Übertragen einer Schlüsselanforderung an die V2X-Dienstplattform, die Schlüsselanforderung umfassend die Endgerätekennung und die Dienstkennung des ersten V2X-Endgeräts und eine Endgerätekennung und eine Dienstkennung des zweiten V2X-Endgeräts; und
Empfangen des V2X-Kommunikationsschlüssels des ersten V2X-Endgeräts, der von der V2X-Dienstplattform zurückgegeben wird.

3. Verfahren zur sicheren Kommunikation zwischen Endgeräten für Vehicle to Everything, V2X, umfassend:
Empfangen einer Registrierungsanforderung von einem ersten V2X-Endgerät durch eine V2X-Dienstplattform, wobei die Registrierungsanforderung eine Endgerätekennung und eine Dienstkennung des ersten V2X-Endgeräts umfasst, Erzeugen eines V2X-Kommunikationsschlüssels für das erste V2X-Endgerät, Speichern des V2X-Kommunikationsschlüssels entsprechend der Endgerätekennung und der Dienstkennung des ersten V2X-Endgeräts, und Zurückgeben des V2X-Kommunikationsschlüssels an das erste V2X-Endgerät;
Empfangen des von der V2X-Dienstplattform zurückgegebenen V2X-Kommunikationsschlüssels durch das erste V2X-Endgerät und lokales Speichern des V2X-Kommunikationsschlüssels;
Senden einer ersten Nachricht durch das erste V2X-Endgerät, wobei die erste Nachricht durch den V2X-Kommunikationsschlüssel verschlüsselt ist;
Empfangen der ersten Nachricht durch ein zweites V2X-Endgerät und Erfassen der Endgerätekennung und der Dienstkennung des ersten V2X-Endgeräts durch Analysieren der ersten Nachricht als Reaktion darauf, dass das zweite V2X-Endgerät in einem Kommunikationsbereich des ersten V2X-Endgeräts fährt, und Senden einer Schlüsselanforderung an die V2X-Dienstplattform, die Schlüsselanforderung umfassend die Endgerätekennung und die Dienstkennung des ersten V2X-Endgeräts und eine Endgerätekennung und eine Dienstkennung des zweiten V2X-Endgeräts;
Empfangen der Schlüsselanforderung durch die V2X-Dienstplattform, Überprüfen, ob das zweite V2X-Endgerät bereits registriert ist, entsprechend der Endgerätekennung und/oder der Dienstkennung des zweiten V2X-Endgeräts, und wenn verifiziert wird, dass das zweite V2X-Endgerät bereits registriert ist, Suchen des V2X-Kommunikationsschlüssels des ersten V2X-Endgeräts entsprechend der Endgerätekennung und/oder der Dienstkennung des ersten V2X-Endgeräts, und Zurückgeben des V2X-Kommunikationsschlüssels des ersten V2X-Endgeräts an das zweite V2X-Endgerät;
Empfangen und Speichern des V2X-Kommunikationsschlüssels des ersten V2X-Endgeräts, der von der V2X-Dienstplattform zurückgegeben wird, durch das zweite V2X-Endgerät, und Entschlüsseln und Analysieren der ersten Nachricht durch den V2X-Kommunikationsschlüssel des ersten V2X-Endgeräts, um einen Inhalt der ersten Nachricht zu erfassen; und
Entfernen des V2X-Kommunikationsschlüssels des ersten V2X-Endgeräts durch das zweite V2X-Endgerät als Reaktion darauf, dass das zweite V2X-Endgerät aus dem Kommunikationsbereich des ersten V2X-Endgeräts herausfährt,
wobei verschiedene V2X-Endgeräte unterschiedliche V2X-Kommunikationsschlüssel zur Kommunikation verwenden.

4. Zweite Vorrichtung, die für eine sichere Kommunikation zwischen Endgeräten für Vehicle to vehicle, V2X, konfiguriert ist, wobei die zweite Vorrichtung in einem zweiten V2X-Endgerät angeordnet ist und Folgendes umfasst:
einen Prozessor; und
einen Speicher zum Speichern von Anweisungen, die von dem Prozessor ausgeführt werden können;
wobei der Prozessor konfiguriert ist, um das Verfahren zur sicheren Kommunikation zwischen V2X-Endgeräten nach einem der Ansprüche 1 oder 2 auszuführen.

5. Computerlesbares Speichermedium, das eine computerausführbare Anweisung speichert, wobei die computerausführbare Anweisung von einem Prozessor ausgeführt wird, um das Verfahren zur sicheren Kommunikation zwischen Endgeräten für Vehicle to Everything, V2X, zu implementieren, das von einem zweiten V2X-Endgerät nach einem der Ansprüche 1 oder 2 ausgeführt wird.

6. Computerlesbares Speichermedium, das eine computerausführbare Anweisung speichert, wobei die computerausführbare Anweisung von einem Prozessor ausgeführt wird, um das Verfahren zur sicheren Kommunikation zwischen Endgeräten für Vehicle to Everything, V2X, nach Anspruch 3 zu implementieren.

## Revendications

1. Procédé de communication sécurisée entre des terminaux de communication de véhicule à X, V2X, (« Vehicle to Everything », en anglais) mis en oeuvre par un deuxième terminal de communication V2X, le procédé comprenant les étapes ci-dessous consistant à :
recevoir (101) un premier message diffusé par un premier terminal de communication V2X, le premier message étant chiffré par une clé de communication V2X du premier terminal de communication V2X, et acquérir un identifiant de terminal et un identifiant de service du premier terminal de communication V2X en analysant syntaxiquement le premier message, en réponse à la conduite du deuxième terminal de communication V2X dans une plage de communication du premier terminal de communication V2X ;
acquérir la clé de communication V2X du premier terminal de communication V2X à partir d'une plateforme de service de communication V2X (102) et sauvegarder la clé de communication V2X du premier terminal de communication V2X ;
déchiffrer et analyser syntaxiquement (103) le premier message en utilisant la clé de communication V2X du premier terminal de communication V2X en vue d'acquérir un contenu du premier message ; et
supprimer la clé de communication V2X du premier terminal de communication V2X en réponse au fait que le deuxième terminal de communication V2X quitte la plage de communication du premier terminal de communication V2X ;
dans laquelle la clé de communication V2X est générée par la plateforme de service de communication V2X et sauvegardée en fonction de l'identifiant de terminal et de l'identifiant de service du premier terminal de communication V2X pour une communication entre le premier terminal de communication V2X et un autre terminal de communication V2X, et différents terminaux de communication V2X utilisent différentes clés de communication V2X pour communiquer.

2. Procédé selon la revendication 1, dans lequel l'étape d'acquisition (102) de la clé de communication V2X du premier terminal de communication V2X auprès de la plateforme de service de communication V2X comprend les étapes ci-dessous consistant à :
transmettre une demande de clé à la plateforme de service de communication V2X, la demande de clé comprenant l'identifiant de terminal et l'identifiant de service du premier terminal de communication V2X, ainsi qu'un identifiant de terminal et un identifiant de service du deuxième terminal de communication V2X ; et
recevoir la clé de communication V2X du premier terminal de communication V2X renvoyée par la plateforme de service de communication V2X.

3. Procédé de communication sécurisée entre des terminaux de communication de véhicule à X, V2X, le procédé comprenant les étapes ci-dessous consistant à :
recevoir, par le biais d'une plateforme de service de communication V2X, une demande d'enregistrement provenant d'un premier terminal de communication V2X, la demande d'enregistrement comprenant un identifiant de terminal et un identifiant de service du premier terminal de communication V2X, générer une clé de communication V2X pour le premier terminal de communication V2X, sauvegarder la clé de communication V2X en correspondance avec l'identifiant de terminal et l'identifiant de service du premier terminal de communication V2X, et renvoyer la clé de communication V2X au premier terminal de communication V2X ;
recevoir, par le biais du premier terminal de communication V2X, la clé de communication V2X renvoyée par la plateforme de service de communication V2X, et sauvegarder la clé de communication V2X localement ;
diffuser, par le biais du premier terminal de communication V2X, un premier message, le premier message étant chiffré par la clé de communication V2X ;
recevoir, par le biais d'un deuxième terminal de communication V2X, le premier message, et acquérir l'identifiant de terminal et l'identifiant de service du premier terminal de communication V2X en analysant syntaxiquement le premier message, en réponse à la conduite du deuxième terminal de communication V2X dans une plage de communication du premier terminal de communication V2X, et transmettre une demande de clé à la plateforme de service de communication V2X, la demande de clé comprenant l'identifiant de terminal et l'identifiant de service du premier terminal de communication V2X, ainsi qu'un identifiant de terminal et un identifiant de service du deuxième terminal de communication V2X ;
recevoir, par le biais de la plateforme de service de communication V2X, la demande de clé, vérifier si le deuxième terminal de communication V2X est déjà enregistré conformément à l'identifiant de terminal et/ou à l'identifiant de service du deuxième terminal de communication V2X, et lorsqu'il est vérifié que le deuxième terminal de communication V2X est déjà enregistré, rechercher la clé de communication V2X du premier terminal de communication V2X conformément à l'identifiant de terminal et/ou à l'identifiant de service du premier terminal de communication V2X, et renvoyer la clé de communication V2X du premier terminal de communication V2X au deuxième terminal de communication V2X ;
recevoir et sauvegarder, par le biais du deuxième terminal de communication V2X, la clé de communication V2X du premier terminal de communication V2X renvoyée par la plateforme de service de communication V2X, et déchiffrer et analyser syntaxiquement le premier message, par le biais de la clé de communication V2X du premier terminal de communication V2X, en vue d'acquérir un contenu du premier message ; et
supprimer, par le biais du deuxième terminal de communication V2X, la clé de communication V2X du premier terminal de communication V2X, en réponse au fait que le deuxième terminal de communication V2X quitte la plage de communication du premier terminal de communication V2X ;
dans lequel différents terminaux de communication V2X utilisent différentes clés de communication V2X pour communiquer.

4. Deuxième appareil configuré pour une communication sécurisée entre des terminaux de communication de véhicule à X, V2X, le deuxième appareil étant disposé dans un deuxième terminal de communication V2X, et comprenant :
un processeur ; et
une mémoire destinée à stocker des instructions exécutables par le processeur ;
dans lequel le processeur est configuré de manière à mettre en oeuvre le procédé de communication sécurisée entre des terminaux de communication V2X selon l'une quelconque des revendications 1 et 2.

5. Support de stockage lisible par ordinateur stockant une instruction exécutable par ordinateur, dans laquelle l'instruction exécutable par ordinateur est exécutée par un processeur pour mettre en oeuvre le procédé de communication sécurisée entre des terminaux de communication de véhicule à X, V2X, mis en oeuvre par un deuxième terminal de communication V2X selon l'une quelconque des revendications 1 et 2.

6. Support de stockage lisible par ordinateur stockant une instruction exécutable par ordinateur, dans laquelle l'instruction exécutable par ordinateur est exécutée par un processeur pour mettre en oeuvre le procédé de communication sécurisée entre des terminaux de communication de véhicule à X, V2X, selon la revendication 3.
